## Europäisches Patentamt

## European Patent Office

## Office européen des brevets

(19)

(11) Veröffentlichungsnummer: **0 165 249**
**B1**

(12) **EUROPÄISCHE PATENTSCHRIFT**

(45) Veröffentlichungstag der Patentschrift:
**27.01.88**

(51) Int. Cl.⁴: **B 24 B 35/00**, B 23 H 1/00

(21) Anmeldenummer: **84903276.8**

(22) Anmeldetag: **12.09.84**

(86) Internationale Anmeldenummer:
**PCT/CH 84/00143**

(87) Internationale Veröffentlichungsnummer:
**WO 85/01464 (11.04.85** Gazette 85/9)

(54) **ANTRIEB ZUM FORMENSCHLEIFEN EINES WERKSTÜCKES.**

(30) Priorität: **01.10.83 CH 5309/83**

(43) Veröffentlichungstag der Anmeldung:
**27.12.85 Patentblatt 85/52**

(45) Bekanntmachung des Hinweises auf die Patenterteilung:
**27.01.88 Patentblatt 88/4**

(84) Benannte Vertragsstaaten:
**DE FR GB**

(56) Entgegenhaltungen:
**FR - A - 2 305 269**
**GB - A - 2 023 466**
**US - A - 2 116 624**
**US - A - 2 285 534**
**US - A - 3 430 026**
**US - A - 3 663 786**
**US - A - 3 988 864**
**US - A - 4 277 915**

(73) Patentinhaber: **Ullmann, Werner, Dr., Casa San Biagio, CH-6644 Orselina (CH)**

(72) Erfinder: **ULLMANN, Werner, Casa San Biagio, CH-6644 Orselina (CH)**
Erfinder: **MATHYS, André, Bodenhostatt 2, CH-6373 Ennetbüren (CH)**

(74) Vertreter: **Grieskamp, Johannes Peter, Patentanwaltsbüro Hannspeter Grieskamp Im Baumgarten 7 Postfach, CH-8123 Ebmatingen (CH)**

ACTORUM AG

## Beschreibung

Die Erfindung betrifft einen Antrieb für eine Maschine zur Herstellung eines Werkstückes einer bestimmten Raumform mittels eines Formenschleif-Werkzeuges von ähnlicher Raumform unter Einhaltung eines Schleifspaltes zwischen dem Formenschleif-Werkzeug und Werkstück sowie unter Mitwirkung eines Schleifmittels und eines Spülmediums, wobei während des Schleifens das Formenschleif-Werkzeug und/oder das Werkstück eine Vorschub- und/oder eine orbitale Bewegung ausführen und die Exzentrizität der orbitalen Bewegung vor dem Schleifen verändert wird.

Bekanntlich umfasst der Formenbau die Herstellung von Formen für die Druckguss, Spritzguss, das Stanzen, Warmpressen Kaltpressen und Schmieden von Materialien aus Stahl, Metallen, Kunststoff, Gummi sowie deren Legierung bzw. Mischungen.

Diese Formen sind häufig kompliziert und weisen eine dreidimensionale Konstruktion auf. Besonders in der Flugzeug- und Automobilindustrie werden solch schwierig herstellbare Formen unter Einhaltung kleinster Toleranzen verlangt. Auf dieselbe Art und Weise werden Werkstücke oder Konstruktionsteile (z.B. im Triebwerkbau) aus schwer zerspannbaren Materialien (z.B. hoch warmfeste Legierungen) hergestellt. Bekanntlich werden solche Formen oder Triebwerkteile durch funkenerosive bzw. elektrochemische Maschinen hergestellt. Die hierfür benützten Elektroden haben die gleiche komplizierte Oberfläche wie die herzustellenden Formen bzw. Teile. Im Laufe der jüngsten Entwicklung werden solche Elektroden auf besonderen Maschinen hergestellt. Die Herstellung erfolgt in der Weise, dass die Elektrode aus dem vollen Material durch einen Schleifvorgang oder Feilvorgang herausgearbeitet wird. Das Material kann z.B. Graphit sein. Das hierfür erforderliche Werkzeug hat bereits die Form der Elektrode mit einem Übermass. Durch eine Relativbewegung zwischen dem Werkzeug und der aus dem vollen Stück herauszuarbeitenden Elektrode erfolgt der Schleifvorgang oder Feilvorgang. Zur Unterstützung des Schleif- oder Feilvorgangs wird ein Schleifmittel in die Oberfläche des Werkzeugs eingebracht, oder die Oberfläche ist bereits rauh (Stahl mit errodierter Oberfläche). Ferner wird eine Flüssigkeit in den Spalt zwischen Werkzeug und Werkstück getan. Die Relativbewegung setzt sich aus zwei Bewegungstypen zusammen. Der eine Typ ist die Vorschubbewegung des Schleif- oder Feilwerkzeugs zum oder vom Elektrodenwerkstück (senkrecht). Diese Vorschubbewegung kann auch kreisförmig (senkrecht) sein. Der andere Typ ist eine kreisende Bewegung des Elektrodenwerkstücks in der horizontalen Ebene. Die kreisende Bewegung wird auch als orbitale oder planetäre Bewegung bezeichnet, sie kann auch kugelförmig sein. Der Radius bzw. die Exzentrizität der kreisenden Bewegung kann verstellt werden. Der Schleifvorgang wird solange durchgeführt bis das Elektrodenwerkstück eine ähnliche Raumform des Werkzeugs angenommen hat. Dann wird die relative Bewegung beendet. Dies erfolgt durch ein an der Maschine eingestelltes Mass, das auch Tiefenendmass genannt wird. Die Raumform des Elektrodenwerkstücks kann gegenüber der Raumform des Werkzeugs verkleinert oder vergrössert werden. Dies wird durch Einstellen der gewünschten Exzentrizität der kreisenden Bewegung bewerkstelligt.

Aus der FR-A-2 305 269 ist eine Funkenerosionsmaschine bekannt geworden, deren als Werkzeug arbeitende Elektrode eine kreisende Bewegung relativ zum Werkstück ausführt. Mittels einer Mikrometerschraube kann die Exzentrizität der kreisenden Bewegung verstellt werden. Vor der Verstellung der Exzentrizität wird die am Funkenspalt anliegende Arbeitsspannung in einer elektronischen Schaltung mit einer Bezugsspannung verglichen. Nur dann, wenn die Arbeitsspannung während eines Bewegungsumlaufes der Elektrode höher ist als die Bezugsspannung, wird die Exzentrizität vergrössert. Hierdurch soll verhindert werden, dass die Elektrode und das Werkstück sich zu nahe kommen oder sich berühren, was einen Kurzschluss und somit eine ungewollte Beendigung der funkenerosiven Bearbeitung des Werkstückes bewirkt.

Die US-A-3 430 026 zeigt einen Schnellwechsel-Werkzeughalter für die funkenerosive Herstellung von Löchern in einem Werkstück. Die als Werkzeug arbeitende Elektrode ist zylinderförmig, dreht sich um ihre Längsachse und führt eine kreisende Bewegung aus. Die Exzentrizität der kreisenden Bewegung wird nur bei stillstehender Maschine mit Hand eingestellt. Die Drehbewegung der Elektrode dient dazu, dass immer andere Teile der Elektrodenoberfläche an der funkenerosiven Bearbeitung des Werkstücks teilnehmen, so dass der durch die Arbeitsfunken bedingte Verschleiss gleichmässig auf die gesamte Oberfläche der Elektrode verteilt wird.

In den US-A-3 988 863 und US-A-3 988 864 sind wie bei der Erfindung Formenschleifmaschinen beschrieben. Das Schleifwerkzeug und das Werkstück führen kreisende Bewegung gegenseitig aus, wozu zwei oder mehr Exzenterantriebe vorgesehen sind. Die Exzentrizität der kreisenden Bewegung wird bei jedem Exzenterantrieb nach Lösen von mehreren Schrauben, die zwei Konstruktionsteile miteinander fest verbinden, von Hand eingestellt. An jedem Exzenterantrieb wird von Hand der gleiche Betrag der Exzentrizität eingestellt. Anschliessend werden die Schrauben mittels eines Schraubenschlüssels angezogen. In Folge der komplizierten Massnahmen, die für die Einstellung der Exzentrizität notwendig sind, verändert sich ungewollt der Betrag der eingestellten Exzentrizität bei einem oder mehreren Exzenterantrieben. Antriebe mit unterschiedlichen Exzentrizitäts-Beträgen üben deformierende oder zerstörende Kräfte auf die Maschine, das Werkstück und auf sich selber aus.

Zusammenfassend kann festgehalten werden, dass die bekannten Formenschleifmaschinen folgende Nachteile haben:

– Die Exzentrizität der relativen Bewegung kann nicht während des Schleifvorgangs geändert werden. Zu diesem Zweck muss die Maschine stillgesetzt werden.

– Die Einstellung der Exzentrizität erfolgt ungenau. Das ist dadurch bedingt, dass an zwei Stellen der Werkstückauflage die Exzentrizität nacheinander und unabhängig voneinander eingestellt wird.

Trotz grosser Sorgfalt der Bedienungsperson kann ein gewisses Spiel nicht vermieden werden, so dass an der zweiten Stelle der Betrag der eingestellten Exzentrizität von demjenigen der ersten Stelle etwas abweicht.

Die Erfindung hat die Aufgabe, die Nachteile der bekannten Maschinen zur Herstellung von Elektroden zu beseitigen. Durch einen besonderen Antrieb kann die Exzentrizität während des Bearbeitens und ausserdem kontinuierlich verstellt werden. Die Raumform des fertig bearbeiteten Elektrodenwerkstückes ist in jeder Weise komplementär zur Raumform des Werkzeugs. Mit einem einzigen Werkzeug können mehrere Werkstücke mit komplizierter Raumform hergestellt werden.

Die Aufgabe wird durch die im kennzeichnenden Teil des Patentanspruchs 1 definierten Erfindung gelöst.

Ausführungsbeispiele der Erfindung werden anhand der Zeichnungen näher erläutert. Es zeigen:

Fig. 1 als erstes Ausführungsbeispiel ein Getriebe, das zwischen dem Antriebsmotor und der Einrichtung angeordnet ist, die die relative und orbitale Bewegung zwischen dem Werkzeug und dem Werkstück erzeugt;

Fig. 2 eine Draufsicht des Getriebes gemäss den Schnittlinien A - A der Fig. 1;

Fig. 3 die Einrichtung zur Durchführung der relativen, orbitalen Bewegung zwischen dem Werkzeug und dem Werkstück;

Fig. 4 eine Draufsicht auf den gesamten Antrieb mit einem anderen Ausführungsbeispiel der Erfindung;

Fig. 5 als weiteres Ausführungsbeispiel der Erfindung eine elektrische Steuerschaltung für die Einrichtung, die die relative, orbitale Bewegung zwischen dem Werkzeug und dem Werkstück durchführt.

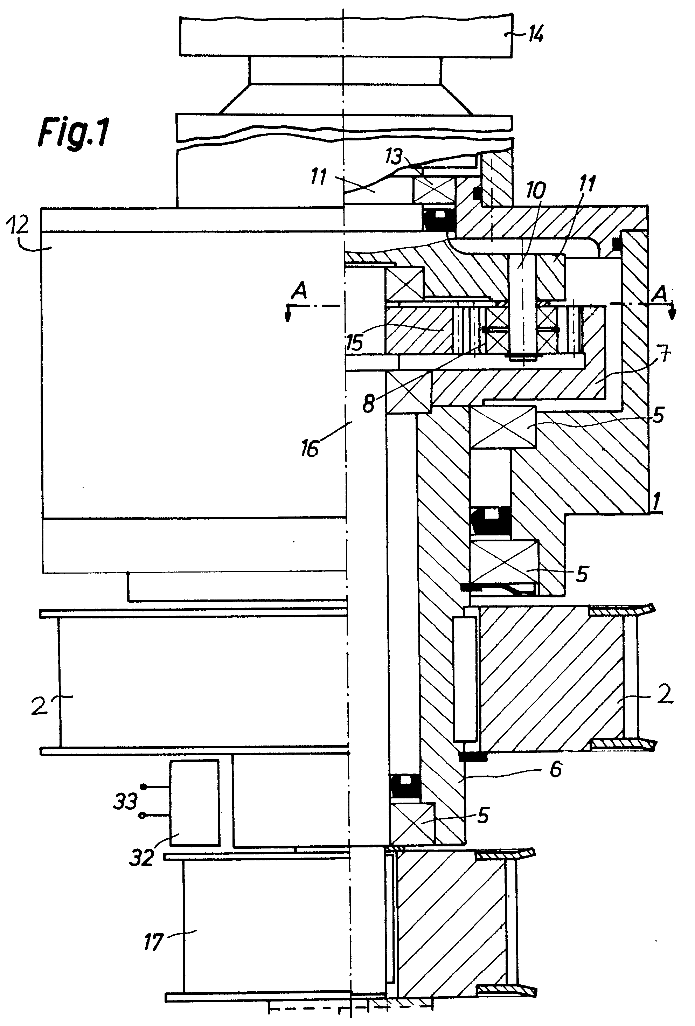

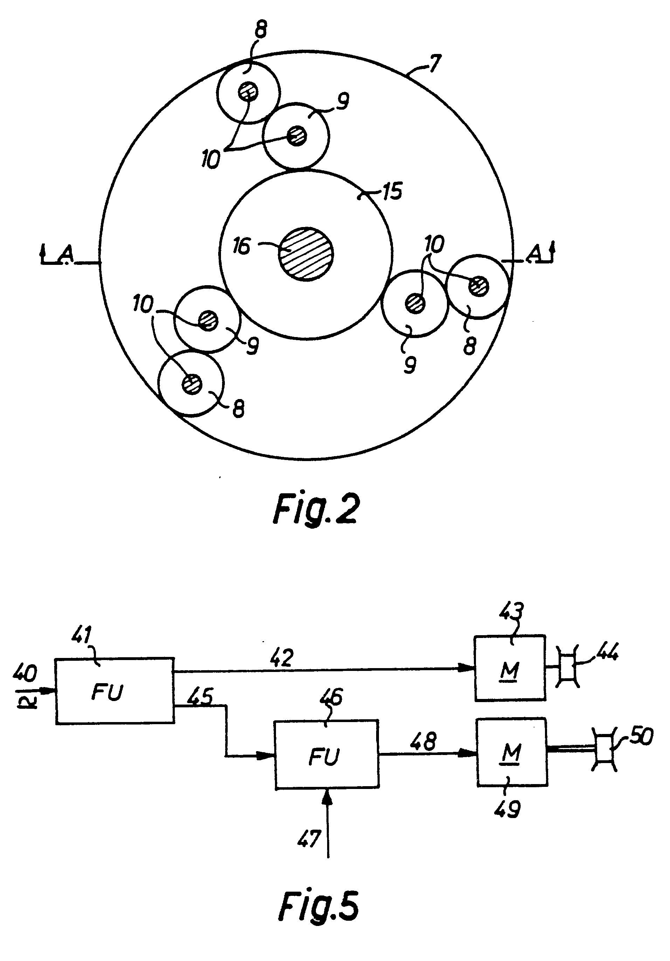

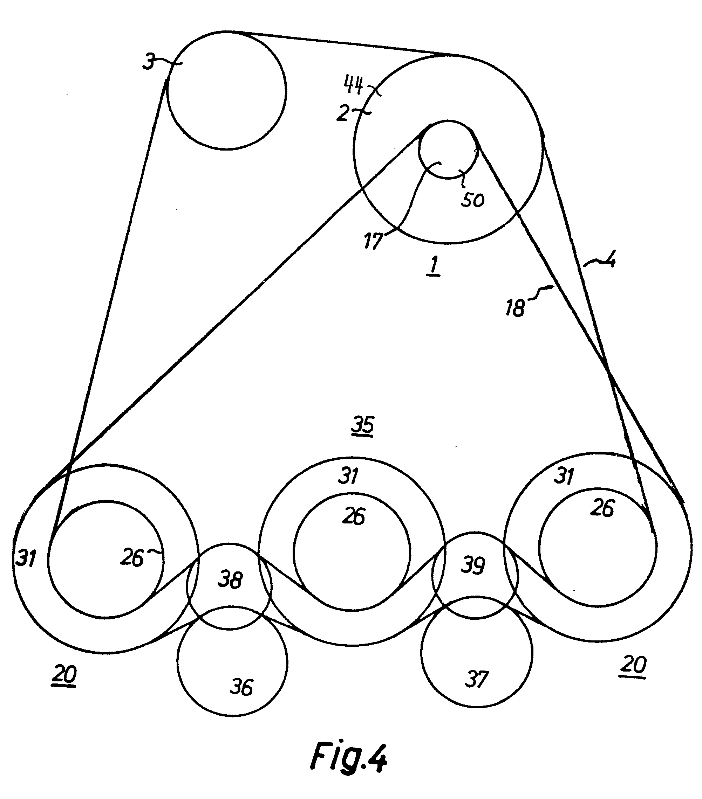

Die Fig. 1 zeigt das Getriebe 1 in teilweiser Schnittdarstellung. Das Antriebsrad 2 wird durch den Elektromotor 3 (Fig. 4) über den Treibriemen 4 angetrieben. Die in den Lagern 5 gelagerte Welle 6, die mit dem Antriebsrad 2 durch einen Keil befestigt ist, dreht das Zahnrad 7, welches die Mitlauf-Zahnräder 8, 9 in Drehung versetzt (Fig. 2). Die Mitlauf-Zahnräder drehen sich um Ihre Achsen 10, die am Konstruktionsstück 11 befestigt sind. Das Konstruktionsstück und die Zahnräder 7, 8, 9, 15 sind im Gehäuse 12 des Getriebes 1 angeordnet. Das Konstruktionsstück 11 ist in den Lagern 13 drehbar gelagert und wird vom elektrischen Schrittmotor 14 schrittweise in Drehbewegung versetzt. Es sei nun angenommen, dass der Schrittmotor nicht in Betrieb ist. Die Drehachsen 10 der Mitlauf-Zahnräder 8, 9 befinden sich in der in Fig. 2 gezeigten Position. Die Mitlauf-Zahnräder 9 versetzen das innere Zahnrad 15 in Drehung, das an seiner Welle 16 befestigt das Abtriebsrad 17 dreht. Dies ist gemäss Fig. 4 über den Treibriemen 18 mit den Einrichtungen 20 verbunden, die den Tisch 21 der Schleifmaschine in eine orbitale Bewegung versetzen. Anstelle des Treibriemen 18 können auch Zahnräder die Verbindung zwischen dem Abtriebrad 17 des Getriebes 1 und den Antriebrädern 31 der Einrichtungen 20 herstellen. Auf dem Tisch ist entweder ein Werkstück oder ein Werkzeug befestigt. Werkzeug und Werkstück führen eine relative orbitale Bewegung aus. Dies wird später noch näher diskutiert.

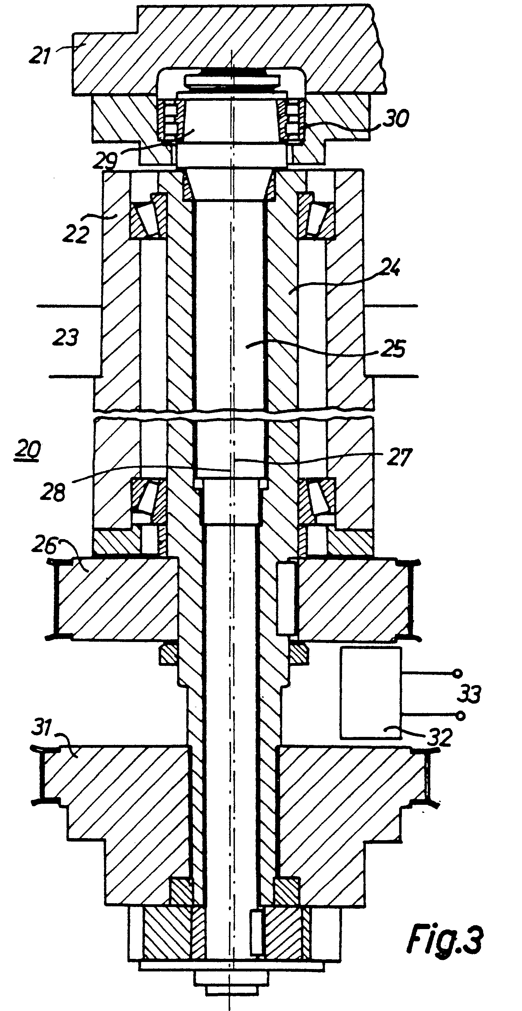

Die Exzentrizität dieser Bewegung wird im Getriebe 1 der Figuren 1 und 2 eingestellt. Zu diesem Zweck wird der Schrittmotor 14 durch elektrische Signale, die aus einer numerischen Steueranlage kommen oder von der Bedienungsperson gegeben werden, in Betrieb gesetzt und dreht das Konstruktionsstück 11 und die Achsen 10 der Mitlauf-Zahnräder 8, 9 um einen oder mehrere Schritte. Hierdurch verändert sich die relative Drehgeschwindigkeit des inneren Zahnrades 15 gegenüber dem äusseren Zahnrad 7. Das Abtriebsrad 17 erfährt die gleiche Änderung der relativen Drehgeschwindigkeit gegenüber dem Antriebsrad 2. Die Änderung der Drehgeschwindigkeit zwischen den beiden Rädern 2 und 17 erfolgt nur in der Zeit, in welcher der Schrittmotor 14 die Achsen 10 bewegt. In dieser Zeit wird der gewünschte Betrag der Exzentrizität der orbitalen Bewegung eingestellt. Bei einem Beispiel verursacht ein Schritt des Schrittmotors 14 eine Drehbewegung der Achsen 10. Dies bewirkt eine Änderung der orbitalen Bewegung in der Grössenordnung von weniger als 1 μm bezogen auf den Radius der gewählten Exzentrizität. Die Exzentrizität kann grösser oder kleiner eingestellt werden. Die Richtung der Drehbewegung der Achsen 10 gegenüber der Drehbewegung des Abtriebszahnrades 15 bestimmt die Einstellung der Exzentrizität in Richtung grössere oder kleinere Werte. In der Fig. 1 ist ein Sensor-Mittel 32 zwischen den beiden Rädern 2, 17 gezeichnet. Solche Sensoren, welche die Drehgeschwindigkeiten der beiden Räder feststellen und diese IST-Werte über Leitungen 33 zu einer Steuerschaltung geben, sind im Handel erhältlich. Daher werden sie nur soweit beschrieben, wie für das Verständnis im vorliegenden Fall erforderlich ist. Diese Sensoren detektieren die Drehgeschwindigkeiten der beiden Räder 2, 17 magnetisch, kapazitiv, induktiv, oder optisch. Wenn nun wegen der Einstellung der Exzentrizität die Drehgeschwindigkeit des Abtriebsrades 17 nicht mehr mit der Drehgeschwindigkeit des Antriebsrades 2 übereinstimmt, meldet das Sensor-Mittel 32 die Änderung der Drehgeschwindigkeit über die Leitungen 33 an die nicht gezeichnete Steuerschaltung, in der der IST-Wert der Exzentrizität mit dem vorgegebenen SOLL-Wert verglichen wird. Bei Übereinstimmung beider Werte ist die gewünschte Exzentrizität eingestellt. Die Anordnung des Sensor-Mittels 32 am Getriebe 1 gemäss Fig. 1 ergibt keine sehr präzisen IST-Werte, da die Treibriemen 4, 18 und die Einrichtungen 20, 35 die am Maschinentisch 21 wirksame Exzentrizität unerwünscht beeinflussen können. Daher ist es besser, wenn das Sensor-Mittel 32 an den Einrichtungen 20, 35 angebracht wird. Dies wird im Zusammenhang mit der Fig. 3 noch näher diskutiert.

Die Fig. 2 zeigt eine Anordnung von drei Paaren Mitlauf-Zahnrädern 8, 9. Jedes Paar ist um 120°C gegenseitig versetzt. Eine Anordnung von zwei Paaren mit einer Versetzung von 180°C ist ohne weiteres möglich. Es ist auch an einer Anordnung von drei Mitlauf-Zahnrädern zwischen den Zahnrädern 7 und 15 gedacht worden.

Die Fig. 3 zeigt die Einrichtung 20, die den Maschinentisch 21 in die orbitale Bewegung mit Exzentrizität versetzt. Das Prinzip ist beschrieben im Buch «INGENIOUS MECHANISMS for Designers and Inventors», Band III, fünfte Auflage, 1959, Verlag The Industrial Press, New York, Fig. 28, Seite 294. Die Einrichtung besteht aus einem Gehäuse 22, das im Maschinengestell 23 befestigt ist, einer im Gehäuse 22 drehbar gelagerten Hülse 24 und aus einer in der Hülse 24 drehbar gelagerten Welle 25. Die Hülse 24 wird durch das Antriebsrad 26 in Drehbewegung versetzt. Das Antriebsrad 26 ist über dem Treibriemen 4 mit dem Antriebsrad 2 des Getriebes 1, mit dem Treibrad des Antriebsmotor 3 und gegebenenfalls mit den Antriebsrädern 26 der anderen Einrichtungen 20 verbunden. Die Welle 25 ist in der Hülse 24 asymmetrisch gelagert, was durch die versetzten Drehachsen 27, 28 der Hülse 24 und Welle 25 dargestellt ist. Am oberen Ende hat die Welle 25 einen Kurbelzapfen 29, der im Lager 20 des Maschinentisches 21 drehbar ist. Am unteren Ende der Welle 25 ist ein Antriebsrad 31 befestigt, das über den Treibriemen 18 mit dem Antriebsrad 17 des Getriebes 1 und gegebenenfalls mit den Rädern 31 der anderen Einrichtungen 20 verbunden ist. Die Welle 25 wird vom Antriebsrad 17 des Getriebes 1 in Drehbewegung versetzt.

Solange der Schrittmotor 14 des Getriebes 1 nicht im Betrieb ist, haben Hülse 24 und Welle 25 die gleiche Drehgeschwindigkeiten. Es ändert sich nichts an diesem Zustand.

Wenn nun eine Exzentrizität der orbitalen Bewegung des Maschinentisches 21 eingestellt oder verändert werden soll, dann wird, wie bereits im Zusammenhang mit Fig. 1 beschrieben, der Schrittmotor 14 in Betrieb gesetzt. Die geänderte Drehgeschwindigkeit des Antriebsrades 17 des Getriebes 1 wird weiter geleitet zum Antriebsrad 31 der Einrichtung 20 der Fig. 3, so dass die Welle 25 nicht mehr wie bisher die gleiche Drehgeschwindigkeit sondern einen Unterschied gegenüber der Hülse 24 aufweist. Die Welle 25 dreht sich relativ zur Hülse 24, so dass der Kurbeltrieb 29 eine neue Position einnimmt. Diese neue Position ist der Betrag der eingestellten Exzentrizität. Das Sensor-Mittel 32, das zwischen den Rädern 26, 31 angebracht ist, detektiert dies und gibt entsprechende elektrische Signale über die Leitungen 33 auf eine nichtgezeichnete Steuerschaltung, in der der IST-Wert der Exzentrizität mit ihrem SOLL-Wert verglichen wird. Bei Übereinstimmen der beiden Werte ist die gewünschte Exzentrizität eingestellt. Da das Sensor-Mittel 32 bereits im Zusammenhang mit der Fig. 1 besprochen wurde, wird es jetzt in der Fig. 3 nicht mehr diskutiert. Der Maschinentisch 21 vollführt nun eine orbitale Bewegung mit dem eingestellten Betrag der Exzentrizität. Die Einstellung oder Änderung der Exzentrizität erfolgt während des Betriebes stufenlos und beliebig oft nach grösseren und kleineren Werten. Die Exzentrizität wird nur von einer einzigen Stelle eingestellt bzw. geändert. Dieser Vorteil macht sich besonders in dem Fall bemerkbar, wenn mehrere Einrichtungen 20 den Maschinentisch 21 in eine orbitale Bewegung bringen sollen. Man muss nicht mehr wie bei den bekannten Ausführungen an jeder Einrichtung einzeln den gewünschten Betrag der Exzentrizität einstellen. Daher können bei der Erfindung keine Ungenauigkeiten mehr auftreten.

Anstelle der in der Fig. 3 gezeichneten, mechanischen Lager 30 des Kurbelzapfens 29 im Maschinentisch 21 können auch die bekannten hydrostatischen Lager verwendet werden. Diese sind in der Fig. 3 nicht eingezeichnet, damit die Übersichtlichkeit der Darstellung erhalten bleibt. Der Vorteil der hydrostatischen Lager liegt darin, dass ein automatischer Ausgleich stattfindet, wenn der Wert der eingestellten Exzentrizität bei der einen Einrichtung 20 einen Unterschied aufweist zu dem bei der anderen Einrichtung 20 eingestellten Wert. Diese Ungenauigkeit kann durch Alterung infolge langer Betriebsjahre entstehen. Infolge dieser unterschiedlichen Exzentrizitätswerte entstehen während der orbitalen Bewegung des Maschinentisches 21 an den Kurbeltrieben 29 und Lagern 30 grosse unterschiedliche Kräfte. Die hydrostatischen Lager 30 sind durch eine Leitung untereinander verbunden und gleichen diese Kräfte aus. Diese Verbindungsleitung kann eine Drossel mit einem Druckfühler enthalten, der die Druckunterschiede detektiert und zu einem nicht gezeichneten Steuerkreis leitet, der die Spannrollen 38, 39 solange in Richtung Treibriemen 18 oder von ihm weg bewegt bis die Druckunterschiede in der Verbindungsleitung der hydrostatischen Lager 30 verschwunden sind, und somit die Exzentrizität in den Einrichtungen identisch ist.

An dieser Stelle wird noch die Erklärung über die unterschiedlichen Durchmesser der Räder 2, 17 am Getriebe 1 und der Antriebsräder 26, 31 an der Einrichtung 20 gegeben. Weil im dargestellten Ausführungsbeispiel des Getriebes 1 die Drehgeschwindigkeit des Abtriebsrades 17 in Folge der gewählten Übersetzung doppelt so gross ist wie die Drehgeschwindigkeit des Antriebsrades 2 wird dieser Drehgeschwindigkeits-Unterschied durch verschiedene Durchmesser der Räder 2, 17, 26, 31 wieder aufgehoben.

Die Fig. 4 zeigt mehrere Merkmale. Einmal wird der gesamte Antrieb mit mehreren Einrichtungen 20 für die orbitale Bewegung des Maschinentisches 21 gezeigt. Hier erkennt man sehr gut die unterschiedlichen Durchmesser der Räder, deren Notwendigkeit oben schon besprochen wurde. Ferner wird eine Einrichtung 35 gezeigt, die gleich wie die Einrichtung 20 konstruiert aber mit ihrem Kurbelzapfen 29 nicht im Maschinentisch 21 sondern in ein Gegengewicht gelagert ist. Dies Gegengewicht, das unterhalb des Maschinentisches 21 angebracht ist, dient zum automatischen Massenausgleich bei der Bearbeitung schwerer und grosser Werkstücke, wenn der Radius der orbitalen Bewegung des Arbeitstisches 21 verändert wird. Ausserdem zeigt die Fig. 4 freibewegliche und mitlaufende Rollen 36, 37, 38, 39. Die Rollen können zwei Aufgaben erfüllen. Erstens dienen sie als Spannrollen, die dafür sorgen, dass die beiden Treibriemen 4 und 18 immer gut gespannt sind. Diese Spannrollen können mit Gewichtstücken oder mittels Federkraft einen stetigen Druck gegen die beiden Treibriemen ausüben. Zweitens können diese Rollen zur Einstellung und Veränderung der Exzentrizität benutzt werden. In diesem Fall sind nur die Rollen 36 und 37 notwendig, die an einem Plunger befestigt sind. Der Plunger, der z.B. von einer numerischen Steueranlage getriggert werden kann und pneumatisch, elektromotorisch, magnetisch oder hydraulisch bewegt wird, schiebt die Räder 36, 37 in den Treibriemen 18, so dass die Drehgeschwindigkeit des Antriebsrades 31 und der Welle 25 sich ändert und zwar relativ zur Drehgeschwindigkeit der Hülse 24. Dies geschieht jedoch nur in den Einrichtungen 20, die den Rädern 36, 37 benachbart sind. Je nach Verschieberichtung der Räder (in Richtung zum Treibriemen 18 oder von dem Treibriemen fort) wird die Exzentrizität in Richtung grösserer oder kleinerer Beträge eingestellt. Die Einstellung der Exzentrizität erfolgt ebenfalls stufenlos und beliebig oft in Richtung grösserer oder kleinerer Beträge. Da mit dieser Methode nur kleine Beträge der Exzentrizität eingestellt werden können, ist auf das Getriebe 1 nicht ganz zu verzichten.

Die Fig. 5 zeigt ein Ausführungsbeispiel der Erfindung, das sich von den anderen Ausführungsbeispielen der Figuren 1 und 4 beträchtlich unterscheidet. In der Fig. 5 wird kein Antriebsmotor 3 für den gesamten Antrieb und kein Getriebe 1 benötigt, sondern ein Frequenzformer 41, der von der Speisespannung 40 gespiesen wird. Die Speisespannung kann die normale Stromversorgung mit einer Wechselspannung von 50 Hz oder 60 Hz oder eine Gleichspannung sein. Im letzteren Falle wird an Stelle des Frequenzumformers 41 ein Wechselrichter genommen. Frequenzumformer und Wechselrichter sind bekannt und werden von einschlägigen Herstellern im Handel angeboten. Daher werden sie an dieser Stelle nicht näher beschrieben. Beide geben an ihre Ausgänge eine bestimmte Leistung mit einer bestimmten Frequenz ab. Im Ausführungsbeispiel der Fig. 5 ist ein Frequenzumformer 41 vorgesehen. Dieser erzeugt eine Wechselspannung mit einer Leistung von 10-20 kW und einer bestimmten Frequenz von z.B. 100 Hz, und versorgt über Leitung 42 einen Synchronmotor 43, der über sein Abtriebsrad 44, den Treibriemen 4, die Antriebsräder 26 und Hülsen 24 der Einrichtungen 20, 35 bewegt (Figuren 3 und 4). Die Drehgeschwindigkeitg des Synchron-Motors 43 wird durch die Frequenz auf der Leitung 42 gesteuert. Der Frequenzumformer 41 gibt die gleiche Frequenz von z.B. 100 Hz mit einer kleineren Leistung auf die andere Leitung 45 zu einem zweiten Frequenzumformer 46. Wenn auf der Steuerleitung 47, die mit einem nicht gezeichneten Steuerkreis verbunden ist, keine Steuersignale vorliegen, gibt der zweite Frequenzumformer 46 die Frequenz ungeändert über Leitung 48 weiter an einen zweiten Synchron-Motor 49, der über sein Abtriebsrad 50, den Treibriemen 18, die Antriebsräder 31 und Wellen 25 der Einrichtungen 20, 35 in Drehung versetzt (Figuren 3 und 4). Die Hülsen 24 und Wellen 25 der Einrichtungen 20, 35 haben die gleiche Drehgeschwindigkeit, weil die beiden Motoren 43, 49 mit der gleichen Frequenz gespiesen werden. An dieser Stelle wird darauf hingewiesen, dass die Antriebsräder 26, 31 der in Fig. 3 gezeigten Einrichtung 20 und die Abtriebsräder 44, 50 der in Fig. 5 gezeigten Synchron-Motoren 43, 49 den gleichen Durchmesser haben. Die genannten Räder können Nuten, haben in die die Zähne der Treibriemen 4, 18 eingreifen.

Zur Einstellung oder Veränderung der Exzentrizität der orbitalen Bewegung des Maschinentisches 21 erscheint auf der Steuerleitung 47 ein Steuersignal, das die Frequenz im zweiten Frequenzumformer 46 ändert. Eine Steuerschaltung, die ein Steuersignal erzeugt, ist z.B. in dem CH-Patentgesuch No. 7432/82-6 (82-110) beschrieben. Der zweite Synchronmotor 49 erhält über Leitung 48 die geänderte Frequenz und hat am Abtriebsrad 50 eine andere Drehgeschwindigkeit relativ zum Abtriebsrad 44 des ersten Synchron-Motors 43. Über den Triebriemen 18 haben die Wellen 25 der Einrichtungen 20, 35 eine andere Drehgeschwindigkeit relativ zu den Hülsen 24, so dass die Kurbelzapfen 29 der Welle 25 eine andere Position einnehmen. Da die Exzentrizität nur während der Zeit der Unterschiedlichen Drehgeschwindigkeit von Hülse 24 und Welle 25 eingestellt oder geändert wird, wird das Steuersignal über Steuerleitung 47 nur so lange an den zweiten Frequenzumformer 46 gelegt, bis der gewünschte Betrag der Exzentrizität erreicht ist. Die Detektion dieses ISTWertes erfolgt über die Sensoren 32 der Fig. 3, die den IST-Wert in einen Komparator der nicht gezeichneten Steuerschaltung geben. Sobald die Übereinstimmung der SOLL- und IST-Werte der Exzentrizität erreicht ist, wird das Steuersignal auf Leitung 47 entfernt. Der zweite Frequenzumformer 46 versorgt nun den zweiten Synchron-Motor 49 mit der gleichen Frequenz, die der erste Synchron-Motor 43 vom ersten Frequenzumformer 41 erhält, so dass die Hülse 24 und Welle 25 der Einrichtungen wieder die gleiche Geschwindigkeit haben.

Mit der Schaltung der Fig. 5 kann die Exzentrizität nach einem bestimmten Muster zyklisch geändert werden. Wenn z.B. das Werkstück auf der in der X-Achse des Maschinentisches 21 liegenden Seite weniger stark geschliffen werden soll als auf der in der Y-Achse liegenden Seite, so muss bei jedem Umgang die Exzentrizität in der Y-Achse einen grösseren Betrag haben als in der X-Achse. Der Maschinentisch 21 macht eine orbitale Bewegung in Form einer Ellipse. Bei jedem Umgang des Maschinentisches 21 werden zwei verschiedene Exzentrizitäts-Werte eingestellt. Die orbitale Bewegung kann auf diese Art und Weise die Kurven eines grossen Teiles der Lissajous – Figuren beschreiben.

**Patentansprüche**

1. Antrieb für eine Maschine zur Herstellung eines Werkstückes einer bestimmten Raumform mittels eines Formenschleif-Werkzeuges von ähnlicher Raumform unter Einhaltung eines Schleifspaltes zwischen dem Formenschleif-Werkzeug und Werkstück sowie unter Mitwirkung eines Schleifmittels und eines Spülmediums, wobei während des Schleifens das Formenschleif-Werkzeug und/oder das Werkstück eine Vorschub- und/oder eine orbitale Bewegung ausführen und die Exzentrizität der orbitalen Bewegung vor dem Schleifen verändert wird, dadurch gekennzeichnet, dass ein mechanisches oder elektrisches Stellorgan (1; 40 - 50) zur kontinuierlichen Einstellung der Exzentrizität während des Schleifens vorgesehen ist, deren Abtrieb (2, 17; 44, 50) mit der Antriebseite (26, 31) mindestens einer Einrichtung (20, 35) zur Durchführung der orbitalen Bewegung immer in Wirkverbindung steht.

2. Antrieb nach Patentanspruch 1, dadurch gekennzeichnet, dass der Antrieb (2, 17; 44, 50) des mechanischen oder elektrischen Stellorgans (1; 40 - 50) zwei Abtriebsräder (2, 17; 44, 50) und die Antriebseite jeder Einrichtung (20, 35) zwei Antriebsräder (26, 31) enthalten, wobei während der Änderung der Exzentrizität die Drehgeschwindigkeiten der Antriebsräder (2, 17; 44, 50) relativ zueinander und der Antriebsräder (26, 31) relativ zueinander unterschiedlich sind.

3. Antrieb nach einem der Patentansprüche 1, 2, dadurch gekennzeichnet, dass das Stellorgan zur kontinuierlichen Änderung, bzw. Einstellung der Exzentrizität als Getriebe (1) ausgebildet ist, dessen Antriebszahnrad (7) über mindestens zwei Mitlauf-Zahnräder (8, 9) mit dem Abtriebszahnrad (15) in dauernder Wirkverbindung steht, wobei die Drehachsen (10) der Mitlauf-Zahnräder an einem Konstruktionsteil (11) befestigt sind, das in Richtung und/oder Gegenrichtung der Bewegung des Antriebszahnrades (7) verschiebbar ist und durch seine Verschiebung die Drehgeschwindigkeit des Abtriebszahnrades (15) gegenüber der Drehgeschwindigkeit des Antriebszahnrades (7) ändert (Figuren 1, 2).

4. Antrieb nach einem der Patentansprüche 1, 2, dadurch gekennzeichnet, dass das Stellorgan zur kontinuierlichen Änderung der Exzentrizität als Elektrische Schaltung mit folgenden Bauteilen ausgebildet ist:

– einen von einer Speisespannung (40) gespiesenen ersten Frequenzumformer (41) mit Ausgängen, dessen einer Ausgang (42) mit einer bestimmten Frequenz einen elektrischen Motor (43) mit einem Antriebsrad (44) ansteuert, das über eine Verbindung (4) die Hülse (24) der Einrichtung (20) in Drehbewegung versetzt und dessen anderer Ausgang (45) einen zweiten Frequenzumformer (46) mit einer bestimmten Frequenz versorgt;

– einen von dem zweiten Frequenzumformer (46) gespiesenen elektrischen Motor (49) mit einem Antriebsrad (50), das über eine Verbindung (18) die Welle (25) der Einrichtung (20) in Drehbewegung versetzt;

wobei der zweite Frequenzumformer (46) einen zweiten Steuereingang (47) besitzt zur kurzzeitigen Änderung der Frequenz und somit der Drehgeschwindigkeit des Motors (49) gegenüber der Drehgeschwindigkeit des zuerstgenannten Motors (43) (Fig. 5).

5. Antrieb nach Patentanspruch 3, dadurch gekennzeichnet, dass drei Paare von Mitlaufzahnrädern (8, 9) zwischen dem Antriebzahnrad (7) und dem Abtriebszahnrad (15) des Getriebes (1) vorgesehen sind, und diese Paare um 120°C gegeneinander versetzt sind (Fig. 2).

6. Antrieb nach einem der Patentansprüche 1, 2, 3, 4, 5, dadurch gekennzeichnet, dass die Abtriebseite mindestens eine Einrichtung (20, 35) aus den folgenden Bauteilen enthält:

– eine in einer Hülse (24) drehbar gelagerte Welle (25) mit einem im Maschinentisch (21) gelagerten Kurbelzapfen (29) an ihrem einen Ende, wobei die Welle exzentrisch in der Hülse angeordnet ist;

– eine Drehverbindung (4) der Hülse (24) mit dem Antriebszahnrad (2) des Getriebes (1) und mit dem Antriebsmotor (3) des gesamten Antriebes;

– eine Drehverbindung (18) der Welle (25) mit dem Antriebszahnrad (17) des Getriebes (1) (Fig. 3).

7. Antrieb nach Patentansprüchen 3 oder 4 und 6, dadurch gekennzeichnet, dass zwischen dem Getriebe (1) oder dem Abtrieb (44, 50) der elektrischen Schaltung (40 - 50) und der auf der Antriebseite angeordneten Einrichtung (20, 35) ein weiteres Stellorgan (36, 37) vorgesehen ist, das die Drehverbindung (18) der Welle (25) mit dem Getriebe (1) oder der elektrischen Schaltung (40 - 50) zur Änderung der Drehzahl der Welle (25) relativ zur Hülse (24) beeinflusst und somit die Exzentrizität ändert (Figuren 4 und 5).

8. Antrieb nach Patentanspruch 3, dadurch gekennzeichnet, dass Sensor-Mittel (32) vorgesehen sind zur Detektion der Änderung der Antriebsgeschwindigkeit des Abtriebsrades (17) und somit zur Erfassung des wirklichen Wertes der eingestellten Exzentrizität der orbitalen Bewegung des Maschinentisches (21).

9. Antrieb nach Patentanspruch 6 oder Patentspruch 7, dadurch gekennzeichnet, dass die auf der Abtriebsseite vorgesehene Einrichtung (20) Sensor-Mittel (32) enthält zur Detektion der Änderung der Drehgeschwindigkeit der Welle (25) gegenüber der Drehgeschwindigkeit der Hülse (24) und somit zur Erfassung des wirklichen Wertes der eingestellten Exzentrizität der orbitalen Bewegung des Maschinentisches (21) Fig. 3).

10. Antrieb nach Patentanspruch 6, dadurch gekennzeichnet, dass der Kurbelzapfen (29) der Welle (25) hydrostatisch im Maschinentisch (21) gelagert ist, wobei die hydrostatischen Lager (30) mehrerer Einrichtungen (20) über einen Druck-Detektor enthaltende Leitungen miteinander verbunden sind, welcher Druck-Detektor bei unterschiedlichem Druck in den hydrostatischen Lagern (30) die Drehverbindung (18) der Wellen (25) mit dem weiteren Stellorgan (36, 37) solange beeinflusst bis der Druckunterschied den Wert Null erreicht hat und somit der Betrag der eingestellten Exzentrizität in allen Einrichtungen (20) gleich ist (Figuren 3 und 4).

**Claims**

1. Drive for a machine for fabricating a workpiece having a predetermined spatial shape whilst maintaining a grinding gap between the form grinding tool and the workpiece as well as under the action of an abrasive means and of a flushing medium, the tool and/or the workpiece exerting a feeding and/or orbital motion relatively to each other and the excentricity of the orbital motion being modified prior to grinding, characterized in that there is provided a mechanical or electrical control unit (1; 40-50) for continuously changing the excentricity during grinding whose output side (2, 17; 44, 50) remains continuously in operative connection with the intake side (26, 31) of at least one device (20, 35) carrying out the orbital motion.

2. Drive according to claim 1, characterized in that the output side (2, 17; 44, 50) of the mechanical or electrical control unit (1; 40, 50) comprises two takeoff wheels (2, 17; 44, 50) and that the intake side of each device (20, 35) comprises two drive wheels (26, 31), the rotational speeds of the takeoff wheels (2, 17; 44, 50) relatively to each other being different as well as those of the driven wheels relatively to each other during the change of the excentricity.

3. Drive according to one of claims 1 and 2, characterized in that the control unit for continuously modifying respectively adjusting the excentricity is made up as a drive (1) whose drive gearwheel (7) is in continuous operative connection with the takeoff gearwheel (15) through at least two idler gearwheels (8, 9), the shafts of the idler gearwheels being attached to a structural part (11) which is displaceable in the direction and/or opposite direction of the motion of the drive gearwheel (7) and, due to its displacement, changes the rotational speed of the output gearwheel (15) with regard to the one of the drive gearwheel (7) (Figs. 1, 2).

4. Drive according to one of claims 1 and 2, characterized in that the control unit for continuously charging the excentricity is an electric circuit comprising the following items:
   – a first frequency modulator (41) fed by the feed voltage conduit (40), with exits one (42) of which triggers with a determined frequency an electric motor (43) equipped with a drive wheel (44) which by means of a transmission (4) rotates a sleeve (24) of the device (20) and whose other exit (45) provides a second frequency modulator (46) with a determined frequency;
   – an electric motor (49) fed by said second frequency modulator (46) and equipped with a driving wheel (50) which by means of a transmission (18) rotates a shaft (25) of the device;
   the second frequency modulator (46) having a second control input (47) for temporarily changing the frequency and with it the rotational speed of the motor (49) with regard to the one of the first mentioned motor (43) (Fig. 5).

5. Drive according to claim 3, characterized in that three pairs of idler gearwheels (8, 9) between the drive gearwheel (7) and the takeoff gearwheel (15) are provided and displaced by 120 degrees relative to each other (Fig. 2).

6. Drive according to one of claims 1 to 5, characterized in that the takeoff side comprises at least one device (20, 35) consisting of the following items:
   – a shaft (25) rotatable in a sleeve (24) with a crank pin (29) at one end of said shaft and located within the machine table (21), the shaft being arranged excentrically within the sleeve;
   – means (4) for rotating the sleeve (24), linking it to the drive gearwheel (2) of the gear (1) and to the drive motor (3) of the entire drive.
   – means (18) for rotating the shaft (25), linking it to the takeoff gearwheel (17) of the gear (1) (Fig. 3).

7. Drive according to claim 3 or claims 4 and 5, characterized in that between the drive (1) or the takeoff side (44, 50) of the electric circuit (40-50) and the device (20, 35) on the drive side a regulating device (36, 37) is provided which influences the means (18) linking the shaft (25) to the gear or to the electric control unit (40 - 50) for changing the rotational speed of the shaft (25) relative to the sleeve (24), thus changing the excentricity (Figs. 4, 5).

8. Drive according to claim 3, characterized in that sensor means (32) are provided for detecting the change of the drive speed of the takeoff wheel (17) and thus for detecting the effective value of the preset excentricity of the orbital movement of the machine table (21).

9. Drive according to claim 6 or 7, characterized in that the device (20) provided for on the takeoff side comprises sensor means (32) for detecting the change in rotational speed of the shaft (25) with regard to the one of the sleeve (24) and thus for detecting the effective value of the preset excentricity of the orbital movement of the machine table (21) (Fig. 3).

10. Drive according to claim 6, characterized in that the crank pin (29) of the shaft (25) is supported hydrostatically in the machine table (21), the hydrostatic bearings (30) of several devices (20) being linked to each other via conduits containing a pressure detector influencing, at different pressures in the bearings (30), the means (18) linking the shafts (25) to the regulating devices (36, 37) during a period so long until the pressure differences have reached the value of zero, the amount of the preset excentricity therefore being equal in all devices (20) (Figs. 3 and 4).

**Revendications**

1. Mécanisme d'entraînement d'une machine destinée à la fabrication d'une pièce d'ouvrage présentant une forme définie, au moyen d'un outil de rectification des moules de même forme, en respectant une fente de rectification entre l'outil de rectification et la pièce d'ouvrage, ainsi qu'en utilisant un abrasif et un fluide de lavage, l'outil de rectification et/ou la pièce d'ouvrage exécutant un mouvement d'avance et/ou un mouvement orbital l'un par rapport à l'autre, pendant la rectification, et l'excentricité du mouvement orbital étant modifiée avant la rectification, caractérisé en ce qu'il est prévu, pour le réglage continu de l'excentricité pendant la rectification, un organe de réglage (1; 40-50) mécanique ou électrique, dont les éléments menés (2, 27; 40, 50) sont toujours en liaison active avec le côté menant (26, 31) d'au moins un dispositif (20, 35) d'exécution du mouvement orbital.

2. Mécanisme d'entraînement selon la revendication 1, caractérisé en ce que les éléments menés (2, 17; 44, 50) de l'organe de réglage (1; 40 - 50) mécanique ou électrique, comportent deux roues menées (2, 17; 44, 50) et le côté menant de chaque dispositif (20, 35) comporte deux roues menantes (26, 31), les vitesses de rotation réciproque des roues menées (2, 17; 44, 50) ainsi que les vitesses de rotation réciproque des roues menantes (26, 31) étant différentes, pendant la variation de l'excentricité.

3. Mécanisme d'entraînement selon l'une des revendications 1 ou 2, caractérisé en ce que l'organe de réglage, de variation continue, ou le réglage de l'excentricité est un train d'engrenages (1) dont la roue dentée menante (7) est en liaison active permanente avec la roue dentée menée (15), par au moins deux roues dentées intermédiaires (8, 9), les axes de rotation (10) des roues dentées intermédiaires étant fixés sur un élément de construction (11) pouvant se déplacer dans le sens et/ou dans le sens inverse du mouvement de la roue dentée menante (7), et faisant varier la vitesse de rotation de la roue dentée menée (15) par rapport à la vitesse de rotation de la roue dentée menante (7), par son déplacement (figures 1, 2).

4. Mécanisme d'entraînement selon les revendications 1 ou 2, caractérisé en ce que l'organe de réglage pour la modification continue de l'excentricité est un circuit électrique comportant les éléments constitutifs suivants:

– un premier convertisseur de fréquence (41) alimenté par une tension d'alimentation (40), comportant des sorties dont l'une (42) commande, sous une certaine fréquence, un moteur électrique (43) comprenant une roue menante (44) qui, par un organe de liaison (4), met en rotation le fourreau (24) du dispositif (20) et dont l'autre sortie (45) alimente un deuxième convertisseur de fréquence (46) sous une certaine fréquence;

– un moteur électrique (49) alimenté par le deuxième convertisseur de fréquence (46) comportant une roue menante (50) qui, par un organe de liaison (18), met en rotation l'arbre (25) du dispositif (20),

le deuxième convertisseur de fréquence (46) présentant une deuxième entrée de commande (47) permettant de faire varier pendant une courte durée la fréquence, et par conséquent la vitesse de rotation du moteur (49) par rapport à la vitesse de rotation du premier moteur (43) cité (figure 5).

5. Mécanisme d'entraînement selon la revendication 3, caractérisé en ce que trois paires de roues dentées intermédiaires (8, 9) sont prévues entre la roue dentée menante (7) et la roue dentée menée (15) du train d'engrenages (1), et en ce que ces paires sont décalées de 120° les unes par rapport aux autres (figure 2).

6. Mécanisme d'entraînement selon l'une des revendications 1, 2, 3, 4, 5, caractérisé en ce que le côté mené comporte au moins un dispositif (20, 35) constitué des éléments suivants:

– un arbre (25) monté en rotation dans un fourreau (24), comportant à l'une de ses extrémités un tourillon (29) monté dans la table de la machine (21), l'arbre étant disposé excentriquement dans le fourreau;

– un organe de liaison rotative (4) du fourreau (24) avec la roue dentée menante (2) du train d'engrenages (1) ainsi qu'avec le moteur d'entraînement (3) de l'ensemble du mécanisme d'entraînement;

– un organe de liaison rotative (18) de l'arbre (25) avec la roue dentée menée (17) du train d'engrenages (1) (figure 3).

7. Mécanisme d'entraînement selon les revendications 3 ou 4 et 6, caractérisé en ce qu'il est prévu, entre le train d'engrenages (1) ou les éléments menés (44, 50) du circuit électrique (40-50) et du dispositif (20, 35) disposé du côté menant, un autre organe de réglage (36, 37) qui agit sur l'organe de liaison rotative (18) de l'arbre (25) avec le train d'engrenages (1) ou avec le circuit électrique (40-50), pour faire varier la vitesse de rotation de l'arbre (25) par rapport au fourreau (24) et modifier ainsi l'excentricité (figures 4 et 5).

8. Mécanisme d'entraînement selon la revendication 3, caractérisé en ce que des moyens de détection (32) sont prévus pour la détection de la modification de la vitesse du mécanisme de la roue menée (17) et ainsi pour l'obtention de la valeur réelle de l'excentricité réglée du déplacement orbital de la table (21) de la machine.

9. Mécanisme d'entraînement selon la revendication 6 ou 7, caractérisé en ce que le dispositif (20) prévu côté mené, comporte des moyens de détection (32) permettant la détection de la variation de la vitesse de rotation de l'arbre (25) par rapport à la vitesse de rotation du fourreau (24) et, par conséquent, de détecter la valeur réelle de l'excentricité réglée du mouvement orbital de la table (21) de la machine (figure 3).

10. Mécanisme d'entraînement selon la revendication 6, caractérisé en ce que le tourillon (29) de l'arbre (25) est monté de manière hydrostatique dans la table (21) de la machine, les paliers (30) hydrostatiques de plusieurs dispositifs (20) étant reliés entre eux par des connexions comportant un détecteur de pression, ce dernier agissant sur l'organe de liaison rotative (18) des arbres (25) avec l'autre organe de réglage (36, 37), lorsque la pression varie dans les paliers (30) hydrostatiques, jusqu'à ce que la différence de pression atteigne la valeur zéro et que, par conséquent, la valeur de l'excentricité réglée soit la même dans tous les dispositifs (20) (figures 3 et 4).

Fig.1

Fig.2

Fig.5

Fig.3

Fig.4